# NEUE EUROPÄISCHE PATENTSCHRIFT

(11) **EP 1 729 018 B2**
(45) Veröffentlichungstag und Bekanntmachung des Hinweises auf die Entscheidung über den Einspruch: **23.06.2010**
(45) Hinweis auf die Patenterteilung: 22.08.2007
(21) Anmeldenummer: 05011815.7
(22) Anmeldetag: 01.06.2005
(51) Int. Cl.: F16B 7/18

(54) **Profilverbindungssystem**
Extrusion connection system
Système d'assemblage de profilés

(43) Veröffentlichungstag der Anmeldung: 06.12.2006
(73) Patentinhaber: Kanya AG, 8630 Rüti (CH)
(72) Erfinder: Baer, Walter, 8808 Pfäffikon (CH)
(74) Vertreter: Zeller, Josef

(56) Entgegenhaltungen:
- EP-A2- 0 343 942
- CH-A5- 692 090
- DE-A1- 10 200 964
- DE-U1- 20 106 561
- DE-U1-202004 004 741
- DE-U1-202004 004 741
- DE-U1-202004 012 543
- DE-U1-202004 012 543
- US-A- 3 901 612

## Beschreibung

Die Erfindung betrifft ein Profüverbindungssystem, bestehend aus Profilstäben und Verbindungselementen gemäss dem Oberbegriff von Anspruch 1.

Es sind Profilverbindungssysteme mit Profilstäben aus warmgepresstem Aluminium oder aus Kunststoff mit verschiedensten Verbindungselementen bekannt.

Die Mehrzahl der Profilverbindungssysteme erfordert für die Befestigung der Verbindungselemente an den Profilstabenden maschinelle Bearbeitungen, insbesondere präzis platzierte Bohrungen quer zur Längsachse der Profilstäbe. In jüngerer Zeit werden auch Gewinde in axiale Langlöcher eines ersten Profilstabes geschnitten oder selbstschneidende Gewindeeinsätze eingebracht. Im zweiten Profilstab wird durch ein gebohrtes Loch eine Schraube eingeführt und im Gewindeeinsatz im ersten Profilstab festgespannt. Bei Aenderungen und/oder Erweiterungen von Profilstabkonstruktionen an ihren Einsatzorten, z.B. an einer Messe, fehlen aber vielfach entsprechende maschinelle Einrichtungen. Neue Profilstabkonstruktionen, Aenderungen oder Erweiterungen müssen aber oft an ihren Einsatzorten nur mittels einfachen Montagewerkzeugen wie beispielsweise Handbohrmaschine etc. rasch, präzise und vielfach auch für grosse Belastungen aufgebaut werden.

Aus EP 0458 069 A1 ist ein Profilverbindungssystem mit polygonalen Profilstäben, vorzugsweise mit rechteckigen Querschnitten, bekannt. Diese Profilstäbe weisen ein axiales Langloch und auf den Profilaussenseiten Nuten für Nutensteinverbindungen auf. In zwei einander gegenüberliegenden Nutenkammern eines Profilstabes werden von der Stirnseite Widerlager in der Form von selbstschneidenden Gewindeeinsätzen eingeschraubt. Jeder der beiden Gewindeeinsätze schneidet dabei an beiden eine T-Nut bildenden Flanschen und am Grund der Nutenkammern je Teilumfänge eines Gewindes. Die Gewindeeinsätze weisen im Weiteren eine Bohrung zum Durchstecken des Schaftes einer Schraube in der Form einer Inbusschraube auf, die mit einem im zweiten Profilstab angeordneten Nutenstein die Profilverbindung herstellt. Durch die Anordnung der Gewindeeinsätze und der Inbusschraube in zwei einander gegenüberliegenden T-Nutenkammern von Profilstäben sind zur Erreichung einer symmetrischen Kraftübertragung mindestens zwei Gewindeeinsätze und zwei Inbusschrauben auf beiden Seiten einer kraftneutralen Biegeachse notwendig. Die Kosten für mindestens je zwei Gewindeeinsätze, zwei Inbusschrauben und zwei Nutensteinen sowie insbesondere der Montageaufwand ist pro Stabverbindung entsprechend hoch. Im Weiteren ist der Abscherwiderstand für die Gewindeeinsätze in den selbstgeschnittenen kurzen Gewindeumfangabschnitten in den T-Nutenkammern relativ klein. Durch die sichtbaren beidseitig angebrachten Gewindeeinsätze in den offenen T-Nutkammern wird zusätzlich die durchgehende Nutzung der T-Nuten, insbesondere ein Einlegen von Flächenelementen eingeschränkt sowie die Aesthetik solcher Profilstabkonstruktionen verschlechtert.

Der Erfindung liegt die Aufgabe zugrunde, die im Stand der Technik erwähnten Nachteile zu überwinden und ein Profilverbindungssystem zu schaffen, das sowohl vom Material als auch vom Montageaufwand her kostengünstig ist und Profilstabverbindungen ohne Vorbearbeitungen durch Werkzeugmaschinen an den Profilstäben ermöglicht. Im weiteren sollen Profilstabverbindungen für grosse Belastungen herstellbar sein. Eine wesentliche zusätzliche Zielsetzung besteht darin, neben rechtwinkligen Stirnseite-Längsseitenverbindungen auch stumpf- oder spitzwinklige Stirnseite-Längsseitenverbindungen und Gehrungsverbindungen von etwa 10°-170° sowie gerade und geknickte Stirnseite-Stirnseite-Verbindungen für grosse Belastungen zu schaffen.

Gemäss der Erfindung wird diese Aufgabe durch die Summe der Merkmale von Vorrichtungsanspruch 1.

Mit dem erfindungsgemässen Profilverbindungssystem ist es möglich, mittels einem einsetzbaren Widerlager und einer Schraube, die in der Bohrung des Langloches im ersten Profilstab angeordnet sind, einen im zweiten Profilstab angeordneten Zuganker festzuspannen, ohne an den Profilstäben mittels Werkzeugmaschinen Bearbeitungsoperationen durchführen zu müssen. Dies ermöglicht Profilstabkonstruktionen am Einsatzort zu konzipieren und aufzubauen, ohne kostspielige und zeitbeanspruchende Bearbeitungsoperationen in Werkstätten ausführen zu müssen. Im Weiteren werden pro Verbindung in der Regel nur je ein Stück der notwendigen Verbindungselemente, bestehend aus Widerlager, Schraube und Zuganker, benötigt. Dies erspart Kosten für Material und Arbeit sowie Zeit zwischen Konzept und Erstellung der Profilstabkonstruktion. Durch die Anordnung der Verbindungselemente im axialen Langloch des ersten Profilstabes kann die Verbindung auch entsprechend hohe statische und/oder dynamische Kräfte aufnehmen. Die verschiedenen Befestigungsmöglichkeiten des Widerlagers in der runden Bohrung des axialen Langloches und die Auswahl aus verschiedenen unterschiedlichen Zugankern erlaubt es, das erfindungsgemässe System für alle in der Praxis häufig angewendeten Verbindungen wie Stirnseite-LängsseitenVerbindungen, Gehrungsverbindungen sowie Stirnseite-Stirnseite-Verbindungen mit unterschiedlichen Verbindungswinkeln rasch und kostengünstig einzusetzen.

Gemäss der Erfindung ist das Widerlager als Gewindeeinsatz mit einem selbstschneidenden Aussengewinde, das in die Bohrung des axialen Langloches eingesetzt wird, ausgebildet sein.

Auch für die Kupplung zwischen einem Einsteckschfüssel zum Festspannen einer Schraube sind im Stand der Technik verschiedenste Ausführungsarten bekannt. Als Beispiele für Kupplungsprofile werden Innensechskant, Innensechsrund, Kreuzschlitz etc. genannt. Im weiteren sind bei der Anwendung der Erfindung alle Ausführungsarten von axial drehbaren und schräg durch die Aussennut und durch die Schlüsselöffnung durchsteckbare Steckschlüssel anwendbar, wie beispielsweise mit Kardangelenk, Gelenkachse etc..Gemäss einem Ausführungsbeispiel wird vorgeschlagen, die Schraube mit einem Zylinderkopf mit einem Innensechskant zu verwenden. Solche Schrauben stehen weltweit als Normschrauben kostengünstig zur Verfügung und können mit einem Inbusschlüssel mit kugelförmigem Schlüsselkopf unter einem Winkel, zwischen 15° und 50° zur Längsachse des Profilstabes, durch die Schlüsselöffnung mit dem Schraubenkopf gekuppelt werden.

Bei quadratischen Profilquerschnitten ist die Bohrung des axialen Langloches als Zentralbohrung angeordnet und weist zwei kraftneutrale Biegeachsen auf. Bei Rechteckquerschnitten sind in der Regel zwei oder mehr axiale Langlöcher entlang einer kraftneutralen Biegeachse des Profilstabes angeordnet, in welche, je nach Bedarf, Widerlager einsetzbar sind.

Die Schlüsselöffnung kann als Aufreissnut bei der Profilherstellung vorgeformt sein. Bei Stand der Technik - Profilen fehlen vorgeformte Schlüsselöffnungen oder Profilquerschnitte mit Aufreissnuten. Erfindungsgemass wird vorgeschlagen, angrenzend an die Einbauposition des Widerlagers und des Kopfes der Schraube im Profilstab die Schlüsselöffnung auf eine Länge von etwa 40-80 mm mit Montagewerkzeugen zu öffnen.

Ein Verkanten des Gewindeinsatzes beim Einschrauben in axiale Langlöcher von Profilstäben kann, insbesondere bei auf Gehrung geschnittenen Profilstabverbindungen, vermieden werden, wenn die Gewindeeinsätze zu etwa 50 % ihrer Länge aus einem Führungsteil mit einer etwa spielfreien Gleittoleranz gegenüber dem Langloch und zu etwa 50 % ihrer Länge aus einem Gewindeteil bestehen.

Schneidkanten am selbstschneidenden Gewindeteil sind durch mindestens eine Spannut am Gewindeteil geschaffen.

Die Längsbohrung im Gewindeeinsatz hat zwei Aufgaben zu erfüllen. Einerseits muss sie gross genug zum Durchführen der Schraube sein und anderseits muss sie einen formschlüssigen Zugriff für ein Spannwerkzeug zum Einschrauben des Gewindeeinsatzes in die Profilstäbe schaffen. Gemäss einem Merkmal der Erfindung wird die Längsbohrung im Gewindeeinsatz auf einer Teillänge mit beispielsweise einem Innensechskant zum Einstecken eines Inbusschlüssels etc. versehen.

Die Schlüsselöffnung zum Durchführen eines Steckschlüssels durch den Rohrkörper des axialen Langloches kann mit einer Handbohrmaschine, einer kleinen Handoberfräse, mit einer kleinen Trennscheibe etc. am Einsatzort der Profilstabkonstruktion hergestellt werden. Gemäss einem zusätzlichen Merkmal der Erfindung kann im Querschnitt des Rohrkörpers, der das axiale Langloch bildet, eine Aufreissnut zum Oeffnen der Schlüsselöffnung auf eine vorbestimmte Länge mittels einfachen Montagewerkzeugen vorgesehen sein. Eine solche Aufreissnut verkürzt die Aufbauzeit einer Profilstabkonstruktion ganz wesentlich. Im Weiteren entfällt jegliche Verletzung der Nutflanschen an den Profilaussenseiten, so dass diese uneingeschränkt für weitere Verbindungen zur Verfügung stehen. Auch Vorrichtungen zum Abdecken von Schlüsselöffnungen aus Design-Gründen können entfallen.

Um selbstschneidende Gewindeeinsätze ohne grossen Kraftaufwand im axialen Langloch zu verankern ist, das axiale Langloch entlang des Umfanges mit axial verlaufenden Rippen versehen. Die Höhe der Rippen kann etwas grösser als die vorgesehene Gewindetiefe und der Rippenabstand gleich oder grösser als die Rippenbreite bemessen sein.

Neben rechtwinkligen Proflstabverbindungen sind oft auch stumpf- oder spitzwinklige Gehrungsverbindungen mit Winkeln zwischen 10°-170° und geradlinige axiale Verbindungen gefragt. Solche zusätzliche Verbindungsbeispiele können mit den gleichen Spannelementen, bestehend aus einsetzbaren Widerlagern bzw. aus Gewindeeinsätzen und Schrauben und auf die gewünschte Verbindung angepasste Zuganker nach der gleichen Festspannmethode hergestellt werden.
Neben dem einfachen Nutenstein mit quer zur Nutlängssachse geschnittenen Gewinden, sind Nutensteine mit einer angelenkten Zylindermutter mit Sacklochgewinde für die Schraube, zwei mit Gelenk verbundene Zylindermuttern mit je einem Sacklochgewinde für Schrauben, eine beidseitig offene Zylindermutter mit einem Innengewinde für Schrauben oder ein Widerlager mit einem Durchgangsgewinde etc. als Zuganker einsetzbar.

Für die Uebertragung grosser Kräfte können die Zylindermuttern, gemäss einem Ausführungsbeispiel, einen Aussendurchmesser aufweisen, der gegenüber der Bohrung des axialen Langloches um eine Gleittoleranz kleiner ist.

Eine zusätzliche Sicherung gegen ein Verschieben eines rechtwinkligen Stirnseite-Längsseitenknotens kann, gemäss einem weiteren Ausführungsbeispiel erreicht werden, wenn am Schaft der Schraube ein Spitz mit einem Winkel von etwa 90° angebracht und die Länge des Schaftes ein Einkerben im Nutengrund des zweiten Profilstabes zulässt.

Mit dem erfindungsgemässen Verbindungssystem ist es möglich, die Breite der Schlüsselöffnung an die Breite der an den Aussenseiten des Profilstabes angeordneten T-Nuten anzupassen oder zu unterschreiten. In der Regel wird die Breite der Schlüsselöffnung der Breite der vorgelagerten Nut angepasst.

Zur Wirtschaftlichkeit beim Einsatz des erfindungsgemässen Verbindungssystems tragen neben den kostengünstigen einfachen Verbindungselementen auch die wenigen und einfachen Verfahrensschritte, die alle am Aufbau- bzw. am Verwendungsort der Profilstabkonstruktion durchführbar sind, bei.

Je nach der Position des Verbindungsknotens in der Profilstabkonstruktion kann das Einbringen und Hinführen der Schraube durch das axiale Langloch zum Widerlager zeitraubend und schwierig sein. Um diesen Schwierigkeiten auszuweichen, wird vorgeschlagen, im Widerlager bzw. im Gewindeeinsatz am Ende der Längsbohrung auf der Seite des Führungsteiles eine nach innen vorstehende Ringkante anzuordnen. Die Ringkante kann so dimensioniert werden, dass sie in das Gewinde der Schraube mit Spiel eingreift und die Schraube im Gewindeeinsatz locker festhält.

Im Nachfolgenden soll anhand von Beispielen die Erfindung zusätzlich erläutert werden.

Dabei zeigen:
- Fig. 1: ein Beispiel eines Querschnittes eines Profilstabes,
- Fig. 2: drei für eine Profilstabverbindung notwendige Verbindungs-Elemente,
- Fig. 3: eine rechtwinklige Profilstabverbindung im fertig montierten Zustand,
- Fig. 4: eine Draufsicht auf Fig. 3, bei entferntem Steckschlüssel,
- Fig. 5: ein weiteres Beispiel eines Querschnittes eines Profilstabes,
- Fig.6: ein weiteres Beispiel einer rechtwinkligen Profilstabverbindung,
- Fig.7,: ein weiterers Beispiel von spitzwinkligen Profilstabverbindungen und
- Fig. 8: ein weiteres Beispiel einer geradlinigen axialen Profilstabverbindung.

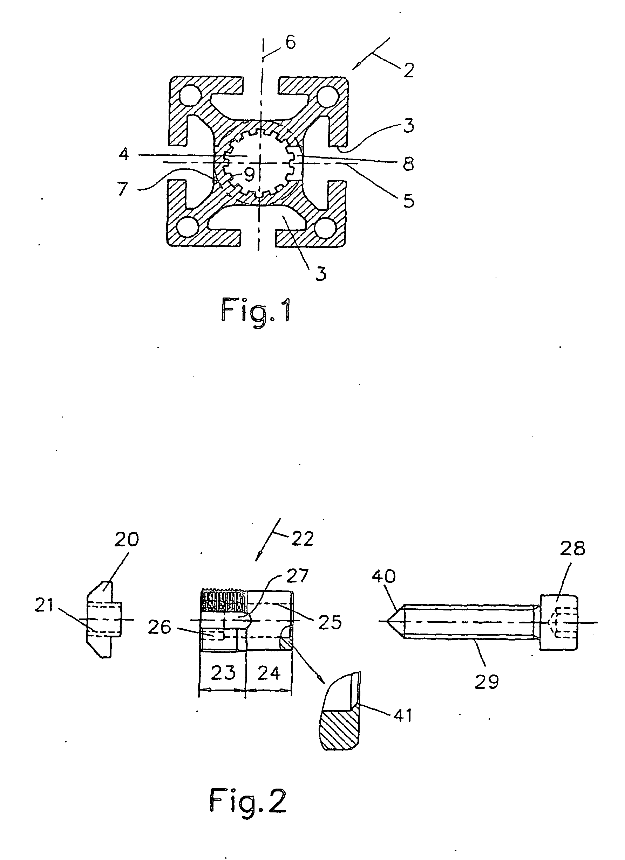

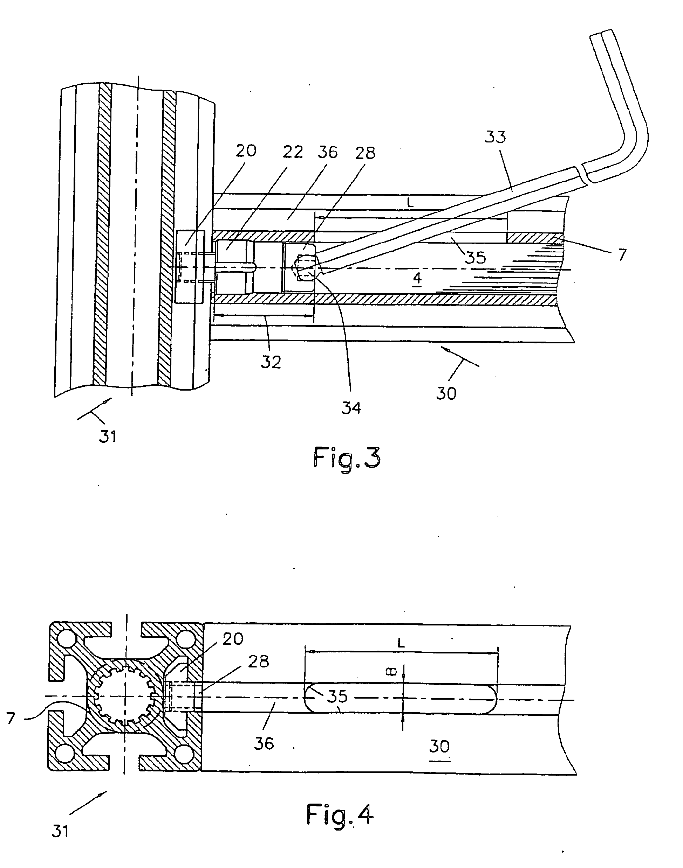

In Fig. 1 ist ein typischer quadratischer Querschnitt eines Profilstabes 2 für Profilstabkonstruktionen dargestellt. Solche Profilstäbe 2 weisen in der Regel auf mindestens einer Profilaussenseite Nuten 3 für eine Aufnahme von Nutensteinen auf. Im Zentrum des Querschnittes ist ein axiales Langloch 4 angeordnet, das kraftneutrale Biegeachsen 5 und 6 aufweist. In einem rechteckigen Querschnitt könnten beispielsweise zwei axiale Langlöcher mit nur einer kraftneutralen Biegeachse angeordnet sein. In einem Rohrkörper 7, der das axiale Langloches 4 einschliesst und der durch eine strichpunktierte Linie angedeutet ist, befindet sich eine Schlüsselöffnung 8, die etwa eine gleiche Breite wie die Nut 3 aufweist und in Fig. 3 zusätzlich erläutert wird. Mit 9 sind axial verlaufende Rippen im axialen Langloch 4 dargestellt. Solche Rippen 9 erleichtern das Schneiden von Gewinden, insbesondere mittels selbstschneidenden Gewindeeinsätzen.

In Fig. 2 ist mit 20 ein auf einen Nutkammerquerschnitt angepasster Nutenstein mit einem Gewinde 21 versehen. An Stelle solcher Nutensteine 20 sind auch einfache plattenförmige Nutensteine anwendbar. Ein Gewindeeinsatz 22 mit einem selbstschneidenden Aussengewindeteil 23 und einem Führungsteil24 stellt ein Ausführungsbeispiel eines Widerlagers dar. Der Gewinde- und der Führungsteil beanspruchen etwa je 50 % der Gesamtlänge des Gewindeeinsatzes 22. Der Gewindeeinsatz 22 ist im Weiteren mit einer Bohrung 25 zum Durchführen des Schaftes 29 einer Inbusschraube 28 versehen. Auf der Seite des Gewindeteiles 23 ist die Bohrung 25 auf einer Teillänge auf einen Innensechskant 26 zum Einstecken eines Inbusschlüssels aufgeweitet. Auf der gegenüberliegenden Seite des Innensechskantes 26 kann die Längsbohrung 25 mit einer nach innen vorstehenden Ringkante 41 versehen sein. Zur Erzeugung von Schneidkanten am Aussengewinde 23 ist mindestens eine Spannut 27 angebracht. Durch die Wahl der Länge und der Einschraubtiefe des Gewindeeinsatzes 22 im Profilstab kann die Länge des Schaftes 29 der Inbusschraube 28 bestimmt und, wenn erwünscht, können Normschaftlängen gewählt werden. Der Kopf der Inbusschraube 28 ist mit einem Innensechskant versehen. An Stelle der Inbusschraube können Schrauben und anderen Kupplungsprofilen für Steckschlüssel gewählt werden. Die Schraube 28 kann am Schaft 29 einen Spitz 40 mit einem Winkel von etwa 90° aufweisen.

In Fig. 3 und 4 ist ein erster Profilstab 30 mit einem zweiten Profilstab 31 mit den in Fig. 2 dargestellten Verbindungselementen Nutenstein 20, Gewindeeinsatz 22 und Inbusschraube 28 verbunden. Ein Inbusschlüssel 33 mit einem kugelförmigen Inbusschlüsselkopf 34 ist in Fig. 3 noch eingesteckt dargestellt. Der Zusammenbau der Verbindung erfolgt gemäss nachfolgenden Verfahrensschritten. Im ersten Profilstab 30 wird angrenzend an die Einbaulänge 32 des Gewindeeinsatzes 22 und der Inbusschraube 28 im Rohrkörper 7, der das axiale Langloch 4 umschliesst, mittels Montagewerkzeugen eine Schlüsselöffnung 35 geschaffen. Die Länge (L) der Schlüsselöffnung 35 wird so gewählt, dass sie zum Einstecken des Inbusschlüssels 33 oder eines Gelenkschlüssels etc. ausreicht. Anschliessend wir im ersten Profilstab 30 von der Stirnseite der selbstschneidende Gewindeeinsatz 22 in das axiale Langloch 4 mittels einem Inbusschlüssel eingeschraubt und dabei gleichzeitig im Langloch 4 ein Gewinde geschnitten. Der Führungsteil 24 (Fig. 2) sorgt für eine Zentrierung des Gewindeeinsatzes 22 im Langloch 4. Die Inbusschraube 28 kann nun vom anderen Ende des Profilstabes 30 in das Langloch 4 und durch die Bohrung 25 (Fig. 2) des Gewindeeinsatzes 22 gebracht werden. Der Inbusschlüssel 33 mit seinem etwa kugelförmigen Inbusschlüsselkopf 34 mit Abflachungen kann nun schräg, d.h, unter einem Winkel zwischen etwa 15- 50°, in den Innensechskant im Kopf der Inbusschraube 28 eingesteckt und nach der Positionierung des Nutsteines 20 im zweiten Profilstab 31 kann die Verbindung der beiden Profilstäbe mittels der Inbusschraube hergestellt und der Inbusschlüssel anschliessend entfernt werden. Die T-Nutkammer 36 oberhalb der Schlüsselöffnung 35 bleibt unverletzt, wie in Fig. 4 erkennbar, und steht bei Bedarf für weitere Profilstabanschlüsse etc. zur Verfügung.

Es ist vielfach von Vorteil, wenn zusammen mit dem Widerlager auch die Schraube in die Bohrung des axialen Langloches eingebracht werden kann. Zu diesem Zweck wird im Widerlager bzw. im Gewindeeinsatz (22) am führungsseitigen Ende die Längsbohrung 25 (Fig. 2) mit einer nach innen vorstehenden Ringkante (41) versehen, die in das Gewinde der Schraube (28) locker eingreifen kann. Die Schraube kann mit ihrem Gewinde an dieser Ringkante 41 befestigt und zusammen mit dem Gewindeeinsatz im Profilstab eingeschraubt werden. Beim Festspannen der Schraube 28 am Zuganker 20 verliert die Ringkante 41 die Haltefunktion am Ende des Gewindes im Bereich des Schraubenkopfes und ermöglicht so ein einwandfreies Festspannen des Zugankers.

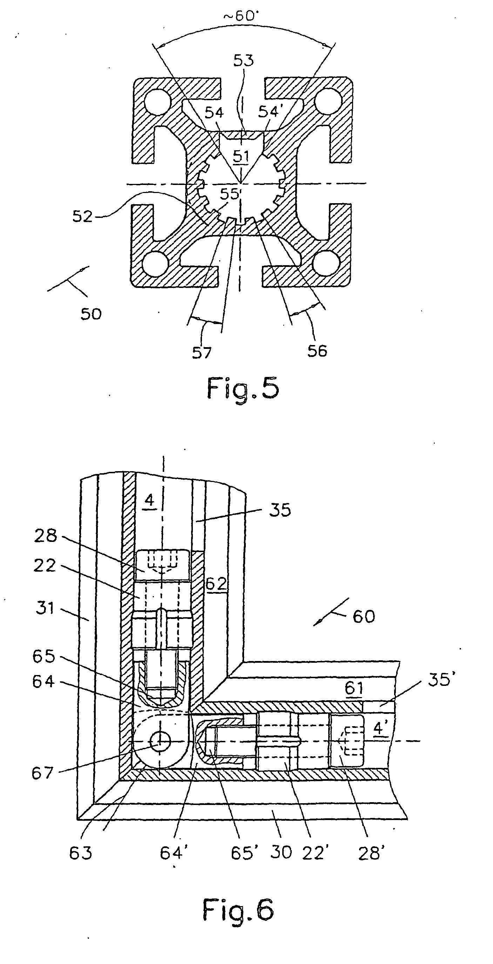

In Fig. 5 ist gemäss einem Ausführungsbeispiel ein Querschnitt eines Profilstabes 50 dargestellt. Ein wesentlicher Unterschied dieses Profilstabes 50 gegenüber dem Querschnitt in Fig. 1 besteht in der Formgebung eines axialen Langloches 51. In einem Rohrkörper 52 (durch strichpunktierte Linien angedeutet) ist mit 53 eine Aufreissnut bei der Herstellung des Profilstabes 50 vorgeformt worden. Eine solche Aufreissnut 53 besitzt an beiden Seiten vorgeformte reduzierte Querschnitte 54, 54' ,die die Soll-Aufreissstellen bilden. Nachdem an beiden Enden einer vorgesehenen Schlüsselöffnung in die Aufreissnut 53 je ein Begrenzungsloch gebohrt ist, kann mittels einem Stangenwerkzeug, beispielsweise einem Schraubenzieher, die Aufreissnut 53 zwischen den beiden gebohrten Begrenzungslöchern durch Aufreissen geöffnet und dadurch die vorgesehene Schlüsselöffnung rasch und in ihrer Breite und Länge massgenau hergestellt werden. Weil die Länge der Schlüsselöffnung nur etwa 5 cm bis 8 cm, d.h. nur ein kleiner Bruchteil der Profilstablänge beträgt, ist die Festigkeitseinbusse durch die geöffnete Aufreissnut vernachlässigbar. Auch der um etwa 60° reduzierte Umfang der Bohrung des axialen Langloches 51, der zum Schneiden eines Gewindes für einen Gewindeeinsatz zur Verfügung steht, ist für die Aufnahme hoher statischer und dynamischer Kräfte der Profilverbindung immer noch ausreichend. Mit 55 sind axial verlaufende Rippen entlang des Umfanges der Bohrung des axialen Langloches 51 dargestellt. Die Höhe der Rippen 55 ist etwas grösser als eine vorgesehene Gewindetiefe eines Gewindeeinsatzes. Ein Rippenabstand 56 wird etwa gleich oder grösser als eine Rippenbreite 57 gewählt.

In Fig 6 ist eine Profilstabverbindung 60, auf Gehrung geschnitten, mit einem Winkel von 90° dargestellt. Der Winkel könnte auch kleiner oder grösser als 90°, beispielsweise 150°, sein. Die beiden Profilstäbe 61 und 62 sind stirnseitig mit einem Winkel von 45°abgelängt. In beiden Stäben wird je ein Gewindeeinsatz 22, 22' in die Bohrung der Langlöcher 4, 4' eingeschraubt. Ein Zuganker 63 besteht aus zwei Zylindermuttern 64, 64' mit je einem Sacklochgewinde 65, 65' für die Inbusschrauben 28, 28'. Auf der dem Sacklochgewinde 65, 65' abgewendeten Seiten sind die beiden Zylindermuttern 64, 64' mit einem Gelenk 67 verbunden. Mit den beiden Inbusschrauben 28, 28' wird der Zuganker 63 in den Profilstäben 61, 62 gegen die Gewindeeinsätze 22, 22' festgespannt und damit die Gehrungsverbindung hergestellt. Mit 35, 35' sind die Schlüsselöffnungen angedeutet.

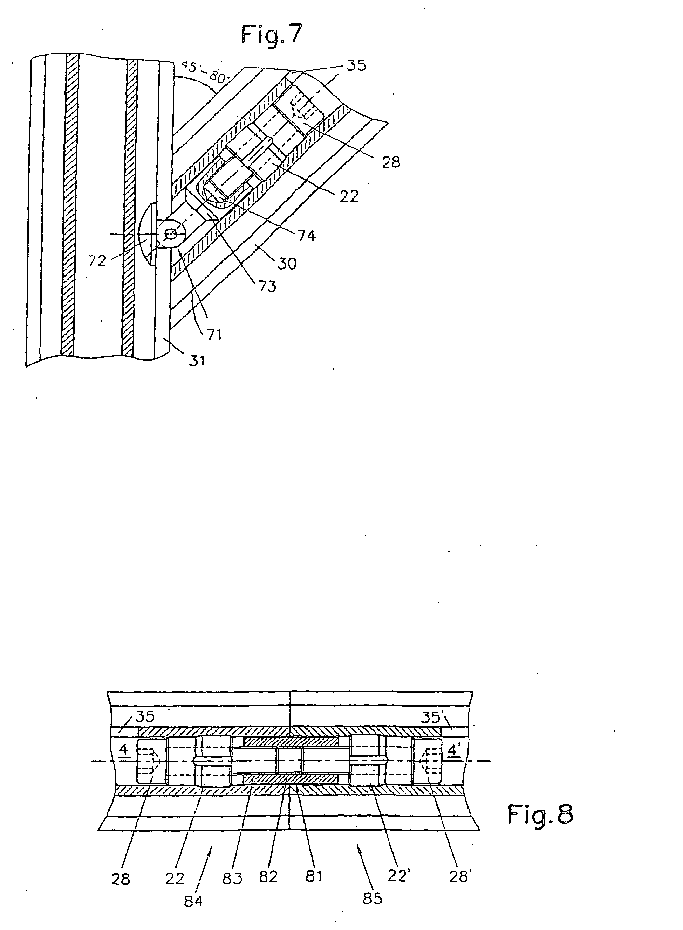

Fig. 7 zeigt eine spitzwinklige Stirnseite-Längsseiten-Verbindung. Der Zuganker 71 besteht aus einem Nutenstein 72 mit einer angelenkten Zylindermutter 73 mit einem Sacklochgewinde 74 für die Inbusschraube 28. Mit 35 ist die Schlüsselöffnung angedeutet.

In Fig. 8 ist eine geradlinige axiale Stirnseite- Stirnseite-Vebindung dargestellt. Ein Zuganker 81 in der Form einer beidseitig offenen Zylindermutter 82 ist mit einem Innengewinde 83 für die Inbusschrauben 28, 28 versehen. Die Zylindermutter 82 ist mit je einer Teillänge im ersten bzw. zweiten Profilstab 84 bzw. 85 in die Bohrung des axialen Langloches 4,4' eingebracht und durch die Inbusschrauben 28, 28' an den Gewindeeinsätzen 22, 22' festgespannt. Mit 35, 35' ist die Schlüsselöffnung angedeutet. Bei einer im wesentlichen geradlinigen Stirnseite - Stirnseite - Verbindung kann, im Sinne einer Variante, auf den Einsatz der Zylindermutter 82 verzichtet werden, wenn einer der beiden Gewindeeinsätze 22, 22' mit einem Muttergewinde im Durchgangsloch für eine verlängerte Schraube versehen ist. Die verlängerte Schraube kann dann direkt im Gewindeeinsatz des zu verbindenen Profilstabes festgespannt werden. Diese Variante ist in Fig 8 nicht dargestellt.

## Patentansprüche

1. Profilverbindungssystem, bestehend aus Profilstäben und Verbindungselementen, wobei die Profilstäbe einen polygonalen, vorzugsweise einen rechteckigen Querschnitt und auf den Profilaussenseiten Nuten (3, 36) für Nutensteinverbindungen aufweisen und ein Verbindungselement aus einem einsetzbaren Widerlager besteht, das im ersten Profilstab (30) in einer Bohrung eines axialen Langloches (4, 51) einsetz- und fixierbar ist, wobei das Widerlager eine Durchgangsbohrung zum Durchführen einer Schraube (28) aufweist, die sich am Widerlager abstützt und dass an einem die Bohrung umschliessenden Rohrkörper (7, 52) eine Schlüsseloffnung (35) vorgesehen und im zweiten Profilstab (31) ein Zuganker angeordnet und durch die Schraube (28) festspannbar ist,
**dadurch gekennzeichnet, dass**
- das einsetzbare Widerlager einen Führungsteil (24) und einen Gewindeteil (23) aufweist, der Führungsteil (24) das Widerlager beim Einsetzen in das axiale Langloch führt und der Gewindeteil (23) mindestens mit einer Spannut (27) versehen ist und beim Einsetzen in das axiale Langloch an axial verlaufenden Rippen (9, 55) im Langloch (4, 51) selbst ein Gewinde schneidet, und
- dass in der Durchgangsbohrung im Widerlager ein formschlüssiger Zugriff für ein Spannwerkzeug zum Einsetzen des Widerlager in den Profilstab und eine nach innen vorstehende Ringkante (41) zum lockeren Festhalten der Schraube (28) im Widerlager angeordnet sind und
- dass die Schlüsselöffnung (35) angrenzend an eine Einbauposition (32) des Widerlager und des Kopfes der Schraube (28) mit einer axial verlaufenden Länge von 40 mm bis 80 mm Durchführen eines Steckschlüssels (33) mit Gelenken oder mit einem im wesentlichen kugelförmigen Steckschlüsselkopf (34) mit Abflachungen unter einem Winkel zwischen 15° und 50° zur Längsachse des Profilstabes (30) gleichzeitig durch den Spalt einer Nut (3, 36) auf der Profilaussenseite und durch die Schlüsselöffnung (35) zulässt und ein Einstecken in den Kopf der Schraube (28) sicherstellt, und dass das im ersten Profilstab (30) einsetzbare Widerlager mittels der Schraube (28) wahlweise
- bei recht-, spitz- oder stumpfwinkligen Stirnseite-Längsseitenverbindungen mit einem im zweiten Profilstab (31) in einer T-Nut angeordneten Zuganker, der aus einem Nutenstein (20) oder einem Nutenstein (72) mit einer angelehkten Zylindermutter (73) besteht, oder
- bei Stirnseite - Stirnseiteverbindungen zwischen 10° - 170° mit einem im zweiten Profilstab (31) in der Bohrung des axialen Langloches (4) angeordneten Zuganker (63), der aus zwei Zylindermuttern (64, 64') mit je einem Sacklochgewinde (65, 65') für Schrauben (28, 28') besteht und die Zylindermuttern (64, 64') auf der dem Sackloch abgewandten Seite ein Gelenk (67) aufweisen, oder
- bei einer Stirnseite-Stirnseiteverbindung von 180° mit einem im zweiten Profilstab in der Bohrung des axialen Langloches (4) angeordneten Zuganker (81), der aus einer beidseitig offenen Zylindermutter (82) mit einem Innengewinde (83) besteht,
verbindbar ist.

2. Profilverbindungssystem nach Anspruch 1, **dadurch gekennzeichnet, dass** die Schraube (28) einen Zylinderkopf mit einem Ankupplungsprofil für den Steckschlüssel (33), vorzugsweise mit einem Innensechskant, aufweist.

3. Profilverbindungssystem nach einem der Ansprüche 1 oder 2, **dadurch gekennzeichnet, dass** die Bohrung des axialen Langloches (4, 51) mindestens eine kraftneutrale Biegeachse (5, 6) des Profilstabes (30) aufweist.

4. Profilverbindungssystem für geradlinige axiale Stirnseite-Stirnseite-Verbindungen nach einem der Ansprüche 1 - 3, **dadurch gekennzeichnet, dass** der Gewindeeinsatz (22) in einem der beiden Profilstäbe mit einem Innengewinde versehen ist und gleichzeitig die Funktion Widerlager und Zugankers übernimmt.

5. Proflverbindungssystem nach einem der Ansprüche 1-5, **dadurch gekennzeichnet, dass** die Zylindermuttern (64, 64', 73, 81) einen Aussendurchmesser aufweisen, der gegenüber dem Durchmesser der Bohrung des axialen Langloches (4) um eine Gleittoleranz kleiner ist.

6. Profilverbindungssystem nach einem der Anspruch 1, **dadurch gekennzeichnet, dass** der Gewindeeinsatz (22) zu etwa 50 % seiner Länge aus einem Führungsteil (24) und zu etwa 50 % aus einem Gewindeteil (23) besteht.

7. Profilverbindungssystem nach einem der Ansprüche 1-6, **dadurch gekennzeichnet, dass** die Schraube (28) am Schaft (29) einen Spitz (40) mit einem Winkel von etwa 90° aufweist und die Länge des Schaftes (29) ein Einkerben in einen Nutengrund des zweiten Profilstabes zulässt.

8. Profilverbindungssystem nach einem der Ansprüche 1- 7, **dadurch gekennzeichnet, dass** der Querschnitt des Profilstabes (50) im Rohrkörper (52), der das axiale Langloch (51) bildet, eine Aufreissnut (53) mit vorgeformten Soll-Aufreissstellen (54, 54') zum Oeffnen der Schlüsselöffnung (35) auf eine vorbestimmte Länge (L) mittels Montagewerkzeugen aufweist.

9. Profilverbindungssystem nach einem der Ansprüche 1 - 7, **dadurch gekennzeichnet, dass** im Querschnitt eines Profilstabes (90) im Rohrkörper (91) der das axiale Langloch (4) bildet, eine Schlüsselnut (95) vorgesehen ist.

10. Profilverbindungssystem nach einem der Ansprüche 1 - 9, **dadurch gekennzeichnet, dass** die axial verlaufenden Rippen (9, 55) eine Höhe aufweisen, die etwas grösser ist als eine vorgesehene Gewindetiefe für den Gewindeeinsatz (22) und der Rippenabstand (56) gleich oder grösser als eine Rippenbreite (57) bemessen ist.

11. Profilverbindungssystem nach einem der Ansprüche 1 - 10, **dadurch gekennzeichnet, dass** die Breite der Schlüsselöffnung (95) gleich oder kleiner ist als die Breite (96) der Nuten (97) auf der Profilaussenseite.

12. Profilverbindungssystem nach einem der Ansprüche 1 - 11, **dadurch gekennzeichnet, dass** die Ringkante (41) im Widerlager bzw. im Gewindeeinsatz (22) am Ende der Längsbohrung (25) auf der Seite des Führungsteiles (24) angeordnet ist.

## Claims

1. Profile connecting system, comprising profile bars and connecting elements, the profile bars having a polygonal, preferably a rectangular, cross-section and on the profile outer sides slots (3, 36) for nut block connections and the connecting elements comprising insertable abutments which are axially insertable and fixable in a bore of an axial elongated hole (4,51) in the first profile bar (30), the abutments having through-bores for guiding a screw (28) therethrough which is supported on the abutments and there is provided in a tubular body (7, 52) surrounding the bore a wrench opening (35)and in the second profile bar (31) a clamp tie anchor is arranged and tightened with the screw (28),
**characterised in that**
the insertabe abutment comprises a guide part (24) and a threaded part (23),the guide part guides the insertable abutment during insertion in the axial elongated hole and the threaded part (23) is provided with at least one clamping slot (27) which during insertion is selfcutting a thread in axially running ribs (9,55) in the elongated hole (4,51) and
in the through-bore of the insertable abutment is provided a form-fitting access for a clamping tool for inserting the abutment into the profile bar and is further provided an inwardly projecting annular edge (41) to loosely hold the screw in the abutment, and the wrench opening (35) adjacent to the installation portion (32) of the abutment and of the head of the screw (28) has a length (L)in the axial direction of the profile bar (30) of approximately 40 mm to 80 mm, which permits guidance therethrough of a socket wrench (33), with joints or with a substantially spherical socket wrench head (34) with flats, at an angle between 15° and 50° to the axial length of the profile bar (30) at the same time through the gap of a slot (3, 36) on the outer side of the profile and through the wrench opening (35) and to allow a coupling with the head of the screw (28) and that the insertable abutment in the first profile bar (30) is connectable with the screw (28) alternatively either
with an end-side to long-side connection with a right-, obtuse- or acute angle with a tie anchchor arranged in a T-slot in the second profile bar (31) in the form of a nut block (20) or a nut block (72) having an articulated cylindrical nut (73) or
with an end-side to end-side connection between 10°-170° with a tie anchor (63) insertable into of the axial elongated hole (4) in the second profile bar (31) and the tie anchor is consisting of two cylindrical nuts (64, 64') each with a blind-hole thread (65,65') for screws (28, 28') and the cylindrical nuts (64, 64') are connected by means of a joint (67) on the side facing away from the blind-hole thread or
with an end-side to end-side connection of 180° with a tie anchor (81), insertable into the axial elongated hole (4) of the second profile bar, consisting of a cylindrical nut (82) open at both ends and having an internal thread (83).

2. Profile connecting system according to Claim 1, **characterised in that** the screw (28) has a cylindrical head with a coupling profile for the socket wrench (33), preferably with a hexagonal socket.

3. Profile connecting system according to Claim 1 or 2, **characterised in that** the bore of the axial elongated hole (4, 51) has at least one force-neutral bending axis (5, 6) of the profile bar (30).

4. Profile connecting system for straight axial end-side to end-side connections according to one of Claims 1-3, **characterised in that** the threaded insert (22) in one of the two profile bars is provided with an internal thread and simultaneously performs the function of abutment and tie anchor.

5. Profile connecting system according to one of Claims 1-4, **characterised in that** the cylindrical nuts (64, 64', 73, 81) have an outside diameter which is smaller by a sliding tolerance than the diameter of the bore of the axial elongated hole (4).

6. Profile connecting system according to Claims 1, **characterised in that** the threaded insert (22) comprises a guide part (24) over approximately 50% of its length and a threaded part (23) over approximately 50% of its length.

7. Profile connecting system according to one of Claims 1-6, **characterised in that** the screw (28) has on the shank (29) a point (40) with an angle of approximately 90° and the length of the shank (29) permits notching into a slot bottom of the second profile bar.

8. Profile connecting system according to one of Claims 1-7, **characterised in that** the cross-section of the profile bar (50) has, in the tubular body (52) forming the axial elongated hole (51), a tear-open slot (53) with preformed predetermined tear-open locations (54, 54') for opening a wrench opening (35) over a predetermined length (L) by means of assembly tools.

9. Profile connecting system according to one of Claims 1 - 7, **characterised in that** a wrench slot (95) is provided in the cross-section of a profile bar (90) in the tubular body (91) forming the axial elongated hole (4).

10. Profile connecting system according to one of Claims 1-9, **characterised in that** the axially running ribs (9, 55), the height of which is somewhat greater than an intended threaded depth for the threaded insert (22), and the rib spacing (56) is dimensioned equal to or greater than a rib width (57).

11. Profile connecting system according to one of Claims 1-10, **characterised in that** the width of the wrench opening (95) is equal to or less than the width (96) of the slots (97) on the profile outer side.

12. Profile connecting system according to one of Claims 1-11, **characterised in that**, the annular edge (41) is provided at the end of the longitudinal bore (25) on the side of the guide part (24) in the abutment or in the threaded insert (22).

## Revendications

1. Système d'assemblage de profilés, constitué par des barreaux profilés et par des éléments d'assemblage, les barreaux profilés présentant une section transversale polygonale, de préférence rectangulaire et comprenant sur les côtés extérieurs de profilé des rainures (3, 36) pour des assemblages à rainure-et-tenon, et les éléments d'assemblage sont constitués par des contre-butées rapportables qui sont susceptibles d'être rapportées et fixées axialement dans un trou oblong axial (4,51) dans le premier barreau profilé (30), les contre-butées présentant des perçages traversants pour faire passer des vis (28) qui prennent appui contre les contre-butées et en ce qu'il est prevue une ouverture à cle (35) dans un corps tubulaire (7,52) entourant le perçage qui tendent des tirants d'ancrage agencés dans le second barreau profilé (31),
**caractérisé en ce que**
- la contre-butée est constituée d'une partie de guidage (24) et d'une partie de filetée (23), la partie de guidage (24) guide la contre-butée lors de son insertion dans le trou oblong axial et la partie filetée est pourvue d'au moins une rainure à copeaux (27) et le contre-butée lors de son insertion dans le trou oblong realise un filetage autotaraudeur aux nervures (9,55) s'étentdant axialement dans le trou oblong axial (4,51) et
- dans le perçage longitudinal dans la contre-butée est prévu un accès en coopération de forme pour un outil de serrage pour visser l'insert fileté dans le barreau profilé et une arête annulaire (41) dépassant vers l'interieur pour retenir avec jeu la vis (28) dans la contre-butée et
- **en ce qu'**il est prévu une ouverture à clé (35) présentant une longueur (L) d'environ 40 mm à 80 mm au voisinage de la position de montage (32) de la contre-butée et de la tête de la vis (28), qui permet le passage d'une clé enfichable (33) munie d'articulation ou d'une tête de clé enfichable (34) sensiblement sphérique et munie de méplats sous un angle entre 15° et 50° par rapport à l'axe longitudinal du barreau profilé (30) et qui permet l'accouplement de la clé enfichable avec la tête de la vis (28) à travers un intervalle d'une rainure (3,36) sur le côté extérieur du profilé et à travers l'ouverture à clé (35) et que la contre-butée rapportée dans le premier barreau profilé (30) est alternativement assemblée avec la vis (28)
- pour des assemblages côté frontal - côté longitudinal à angle droit ou obtus ou aigu avec un tirant d'ancrage constitué par un tenon (20) ou un tenon (72) pourvu d'un écrou cylindrique articulé (73) agencé dans le second barreau profilé (31) dans une rainure en T,
- pour des assemblages en onglet d'environ 10° à 170° avec un tirant d'ancrage (63) constitué de deux écrous cylindriques (64, 64') munis chacun d'un trou borgne taraudé (65,65') pour des vis (28, 28') et sur le côté détourné du trou borgne taraudé au moyen d'une articulation (67),
- pour des assemblages côté frontal - côté frontal axiaux rectilignes avec un tirant d'ancrage (81) susceptible d'être aménagé dans le perçage du trou oblong axial (4) du second barreau profilé, constitué par un écrou cylindrique (82) ouvert des deux côtés et muni d'un taraudage (83).

2. Système d'assemblage de profilés selon la revendication 1, **caractérisé en ce que** la vis (28) comprend une tête cylindrique munie d'un profil d'accouplement pour la clé enfichable (33), de préférence d'un six pans creux.

3. Système d'assemblage de profilés selon l'une des revendications 1 ou 2, **caractérisé en ce que** le perçage du trou oblong axial (4, 51) du barreau profilé comprend au moins un axe de flexion (5, 6) neutre vis-à-vis des forces (30).

4. Système d'assemblage de profilés pour des assemblages côté frontal-côté frontal axiaux rectilignes, selon l'une des revendications 1 à 3, **caractérisé en ce que** l'insert fileté (22) dans l'un des deux barreaux profilés est muni d'un taraudage et accomplit simultanément la fonction de contre-butée et de tirant d'ancrage.

5. Système d'assemblage de profilés selon l'une des revendications 1 à 4, **caractérisé en ce que** les écrous cylindriques (64, 64', 73, 81) présentent un diamètre extérieur qui est inférieur d'une tolérance de glissement au diamètre du perçage du trou oblong axial (4).

6. Système d'assemblage de profilés selon revendication 1, **caractérisé en ce que** l'insert fileté (22) est constitué sur environ 50 % de sa longueur par une partie de guidage (24) et sur environ 50 % par une partie filetée (23).

7. Système d'assemblage de profilés selon l'une des revendications 1 à 6, **caractérisé en ce que** la vis (28) présente au niveau de la tige (29) une pointe (40) d'un angle d'environ 90° et **en ce que** la longueur de la tige (29) permet un entaillage dans le fond de rainure du second barreau profilé.

8. Système d'assemblage de profilés selon l'une des revendications 1 à 7, **caractérisé en ce que** la section transversale du barreau profilé (50) présente, dans le corps tubulaire (52) qui forme le trou oblong axial (51), une rainure de déchirure (53) présentant des emplacements préformés destinés à la déchirure (54, 54') pour ouvrir une ouverture à clé (35) sur une longueur prédéterminée (L) au moyen d'outils de montage.

9. Système d'assemblage de profilés selon l'une des revendications 1 à 7, **caractérisé en ce qu'**une rainure à clé (95) est prévue dans la section transversale d'un barreau profilé (90) dans le corps tubulaire (91) formant le trou oblong axial (4).

10. Système d'assemblage de profilés selon l'une des revendications 1 à 9, **caractérisé en ce que** le trou oblong axial (4, 51) est pourvu, le long de la périphérie, de nervures (9, 55) s'étendant axialement, dont la hauteur est légèrement supérieure à une profondeur de pas de vis prévue pour l'insert fileté (22) et dont la distance entre nervures (56) est supérieure ou égale à la largeur d'une nervure (57).

11. Système d'assemblage de profilés selon l'une des revendications 1 à 10, **caractérisé en ce que** la largeur de l'ouverture à clé (95) est inférieure ou égale à la largeur (96) des rainures (97) sur le côté extérieur du profilé.

12. Système d'assemblage de profilés selon l'une des revendications 1 à 11, **caractérisé en ce que** la contre-butée ou l'insert fileté (22) est pourvu, à l'extrémité du perçage longitudinal (25) sur le côté de la partie de guidage (24), d'une arête annulaire (41 ) dépassant vers l'intérieur et destinée à l'engagement de la vis dans le filetage.
